Europäisches Patentamt

(19) European Patent Office

Office européen des brevets

(11) Numéro de publication: **0 274 463**
**B1**

(12) **FASCICULE DE BREVET EUROPEEN**

(45) Date de publication du fascicule du brevet:
31.01.90

(51) Int. Cl.⁴: **B 07 C 5/34,** B 07 C 5/342,
B 03 B 9/06

(21) Numéro de dépôt: 86904219.2

(22) Date de dépôt: 15.07.86

(86) Numéro de dépôt international:
PCT/FR 86/00251

(87) Numéro de publication internationale:
WO 88/00501 (28.01.88 Gazette 88/3)

(54) DISPOSITIF DE TRI OPTIQUE DU GROISIL, C'EST-A-DIRE D'UNE MASSE D'ELEMENTS DE VERRRE DE RECUPERATION AYANT SUBI UN BROYAGE ET COMPORTANT DES ELEMENTS INFUSIBLES OU REFRACTAIRES, ET INSTALLATION COMPRENANT DE TELS DISPOSITIFS.

(43) Date de publication de la demande:
20.07.88 Bulletin 88/29

(45) Mention de la délivrance du brevet:
31.01.90 Bulletin 90/5

(84) Etats contractants désignés:
BE IT

(56) Documents cités:
DE-A- 1 547 441
DE-B- 2 901 970
FR-A- 2 381 572
GB-A- 1 004 222
US-A- 3 179 247
US-A- 3 890 221
US-A- 3 901 388

(73) Titulaire: VERRERIES SOUCHON NEUVESEL,
64, Boulevard du 11 Novembre 1918,
F-69100 Villeurbanne (FR)

(72) Inventeur: DUONG, Jean-Christophe, 26, rue Picquart,
F-62980 Noyelles les Vermeilles (FR)

(74) Mandataire: Michardière, Bernard et al, C/O CABINET
PEUSCET 68, rue d'Hauteville, F-75010 Paris (FR)

## Description

L'invention concerne la récupération du verre usagé.

On sait que pour des raisons économiques on collecte le verre usagé, notamment sous forme de bouteilles vides, en vue de sa réutilisation dans les fours de verrerie.

Malheureusement l'ensemble collecté comporte, à côté du verre, divers matériaux métalliques, plastiques et céramiques et des bouchons, entre autres.

On procède généralement à l'heure actuelle à un tri manuel en deux phases successives séparées par un broyage:

— dans la première phase, avant broyage, on effectue un premier tri afin d'éliminer les éléments indésirables de grande dimension (bouteilles en matière plastique, assiettes, etc.);

— dans la seconde phase, le produit appelé «groisil» (constitué par la masse collectée, débarrassée d'une partie des éléments indésirables dans la première phase, puis broyée) est soumis à un nouveau tri manuel plus minutieux afin d'éliminer le plus possible d'éléments indésirables pour obtenir un produit, appelé «calcin», apte à être envoyé à un four de verrerie.

Le second tri manuel est pénible, coûteux et surtout peu sûr car il laisse passer des petits fragments de produits réfractaires ou infusibles (porcelaine, faïence, cailloux) qui provoquent des incidents dans le four et entraînant des fabrications de verre de qualité médiocre; des bouteilles fabriquées avec un pourcentage élevé de verre récupéré risquent de se casser lors du remplissage ou bien une fois remplies.

On a donc proposé d'effectuer la deuxième phase de tri au moyen de machines automatiques dans lesquelles on alimente en groisil, à partir d'une trémie, un tapis transporteur qui déverse le groisil à son extrémité aval.

L'invention est relative à un dispositif de tri optique du groisil du genre de ceux qui comportent: des moyens de déversement pour déverser le groisil à trier constitué par des particules de deux natures, à savoir des particules de verre et des particules de nature différente; des moyens optiques permettant de déterminer dans le groisil déversé les particules d'une première nature et comportant une source de lumière et des moyens de détection optique; des moyens d'éjection pour éjecter des particules déterminées hors de la masse de groisil déversé, ces derniers moyens étant commandés par les moyens de détection optique lorsqu'ils détectent une particule d'une première nature; et des moyens pour acheminer séparément, d'une part, les particules de première nature éjectées par les moyens d'éjection vers une première sortie et, d'autre part, le reste de la masse de groisil, constitué essentiellement de particules de seconde nature vers une seconde sortie; un plan incliné en un matériau translucide à la partie supérieure duquel est déversé le groisil à trier par les moyens de déversement; une source de lumière allongée et disposée sous la face inférieure du plan incliné suivant la largeur de celui-ci.

US-A-3 179 247 divulgue un dispositif de tri optique de ce genre comprenant un détecteur photométrique combiné avec un disque entraîné en rotation à vitesse élevée. Un tel système de balayage est relativement fragile en raison des pièces en mouvement et ne présente pas toute l'efficacité souhaitée. En outre, ce document prévoit un éjecteur à air comprimé dont le jet va agir différemment sur les petits et gros morceaux d'infusibles et risque de perturber les portions voisines du rideau de groisil.

US-A-3 890 221 concerne un dispositif de tri prévu pour ne prendre en compte qu'une seule particule par un ensemble de photodétecteurs en vue d'établir des rapports entre les zones d'ombres et les zones éclairées et de déduire le classement de la particule considérée à partir de ces rapports. Un tel dispositif vise à trier des particules selon leurs formes ou leurs tailles alors que l'invention vise à trier les particules selon leur nature. Il s'agit donc de problèmes différents.

GB-A-1 004 222 montre un dispositif de tri dans lequel les particules à séparer tombent en chute libre sur des doigts constituant les moyens d'éjection. Cela peut entraîner une détérioration relativement rapide des doigts, et engendrer des bruits importants.

L'invention a pour but, surtout, de fournir un dispositif de tri optique du genre défini précédemment qui ne présente plus ou à un degré moindre les inconvénients évoqués ci-dessus. On souhaite, en particulier, que les moyens de détection optique et les moyens d'éjection soient efficaces et agissent sur une largeur non négligeable, selon plusieurs canaux, sans provoquer d'interférences sensibles entre canaux voisins.

Selon l'invention, un dispositif de tri optique du genre défini précédemment est caractérisé en ce que les moyens de détection optique sont constitués par une unité opto-électronique allongée, avec un circuit intégré à couplage de charge, disposée au-dessus de la face supérieure du plan incliné suivant la largeur de celui-ci; et en ce que les moyens d'éjection sont constitués par n pièces allongées ou marteaux disposés côte à côte au bas du plan incliné suivant la largeur de celui-ci et pouvant chacune être déplacées entre une première position de repos et une seconde position active sous la commande de l'unité de détection, ces pièces dirigeant, lorsqu'elles occupent la première position, les particules qui glissent sur elles vers la seconde sortie et, lorsqu'elles sont dans la seconde position, les particules qui glissent sur elles vers la première sortie du dispositif, l'unité opto-électronique comportant n canaux qui observent n canaux adjacents du plan incliné, chaque canal du dispositif opto-électronique commandant le marteau, ou pièce allongée, disposé sous le canal du plan incliné observé par ce canal de l'unité opto-électronique, ladite unité opto-électronique comportant — associés à un dispositif photosensible linéaire comportant $m \times n$ photodétecteurs élémentaires regroupés en n groupes de m éléments chacun − une horloge dont le dispositif photosensible reçoit les impulsions d'horloge, en nombre égal à m × n par cycle, sur son entrée horloge, un diviseur de fréquence à compteur apte à diviser la fréquence des impulsions d'horloge par un nombre égal à m × n, une unité d'initialisation recevant la sortie du diviseur de fréquence pour engendrer un signal d'initialisation de cycle ou start, ces impulsions étant appliquées au dispositif photosensible pour initialiser celui-ci toutes les m × n impulsions d'horloge, un amplificateur différentiel connecté en sortie du dispositif photosensible et débitant un signal vidéo représentatif de la lumière détectée successivement par les m × n éléments photodétecteurs du dispositif, un comparateur recevant, d'une part, le signal vidéo précité et, d'autre part, un niveau de seuil et débitant une impulsion vidéo chaque fois que le signal vidéo sortant de l'amplificateur est inférieur au niveau de seuil, un circuit à retard recevant les impulsions d'horloge et débitant des signaux d'horloge retardés déclenchant le comparateur, n unités de commande d'éjection aptes à actionner chacune un des n marteaux et un ensemble de commande apte à commander séparément chacune des unités d'éjection, cet ensemble recevant, d'une part, les impulsions du diviseur de fréquence de commande d'éjection et, d'autre part, les impulsions vidéo du comparateur pour actionner effectivement l'unité de commande d'éjection sélectionnée à cet instant du fait de la réception par cet ensemble d'une impulsion, en provenance du diviseur de fréquence, correspondant à cette unité de commande d'éjection.

Dans le mode de réalisation préféré les particules de première nature sont des particules de réfractaire ou d'infusible, tandis que les particules de seconde nature sont des particules de verre.

Si l'on règle le dispositif de tri optique, tel que défini ci-dessus, pour éliminer sensiblement tous les fragments qui ne sont pas essentiellement en verre, c'est-à-dire si on règle les moyens de détection optique à une sensibilité élevée, on risque d'éliminer, en plus des fragments infusibles ou réfractaires, des fragments de verre, notamment des fragments de verre de grande dimension; en outre, une pièce allongée peut, lorsqu'elle est actionnée, diriger vers la première sortie pour les infusibles non seulement un fragment d'infusible détecté, mais également un fragment de verre très voisin de ce fragment d'infusible, sur le plan incliné dans la zone de détection.

Il peut donc être intéressant de faire suivre un dispositif de tri optique selon l'invention, dont les moyens de détection optique sont réglés pour présenter une grande sensibilité, ou une batterie de tels dispositifs en parallèle, par un autre dispositif de tri optique semblable, mais dont les moyens de détection optique sont réglés pour présenter une sensibilité plus faible et qui reçoit les produits de la première sortie pour les infusibles du premier dispositif ou des dispositifs de la batterie, éventuellement après un criblage éliminant les petits fragments de verre.

L'invention pourra, de toute façon, être bien comprise à l'aide du complément de description qui suit, ainsi que des dessins ci-annexés, lesquels complément et dessins sont, bien entendu, donnés surtout à titre d'indication.

La figure 1 est une vue schématique d'ensemble, avec coupe partielle, d'un dispositif de tri optique selon l'invention.

La figure 2 illustre, à plus grande échelle, les moyens de commande des pièces allongées du dispositif de la figure 1.

La figure 3 illustre le schéma électronique de l'unité opto-électronique de détection.

La figure 4 illustre les formes d'ondes, notamment les impulsions, mises en œuvre dans l'unité de la figure 3.

La figure 5, enfin, illustre un ensemble de tri de verre de récupération mettant en œuvre plusieurs dispositifs de tri optique selon l'invention.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser un dispositif de tri optique du groisil, on s'y prend comme suit ou d'une manière analogue.

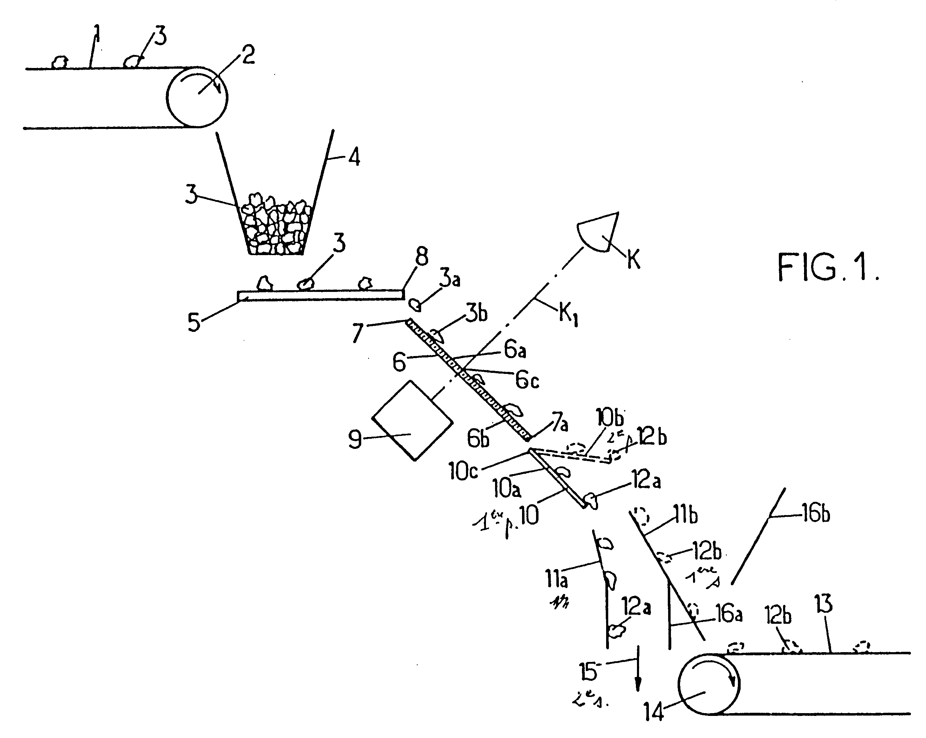

Référence étant d'abord faite à la figure 1, on voit que le dispositif comprend une bande transporteuse 1 entraînée en rotation par un cylindre 2 et amenant des morceaux de groisil 3 à une trémie répartisseuse 4 qui déverse à son tour le groisil 3 sur une table vibrante 5.

Le dispositif comprend essentiellement, selon l'invention:

− un plan incliné 6 réalisé en une matière translucide dans la masse, par exemple en Plexiglas blanc, l'arête supérieure 7 de ce plan incliné se trouvant sous l'extrémité de déversement 8 de la table vibrante 5 pour en recueillir les morceaux de groisil tels que le fragment 3a; les morceaux de groisil reçus, tels que 3b, glissent le long du plan incliné 6 en étant plaqués sur la surface supérieure 6a de ce plan incliné;

− une source de lumière intense allongée 9, constituée par exemple par un tube luminescent ou des lampes de projection, éclaire la face inférieure 6b du plan 6 et traverse ce plan incliné translucide; cette source 9 émet de préférence de la lumière blanche dans le domaine voisin de l'infrarouge;

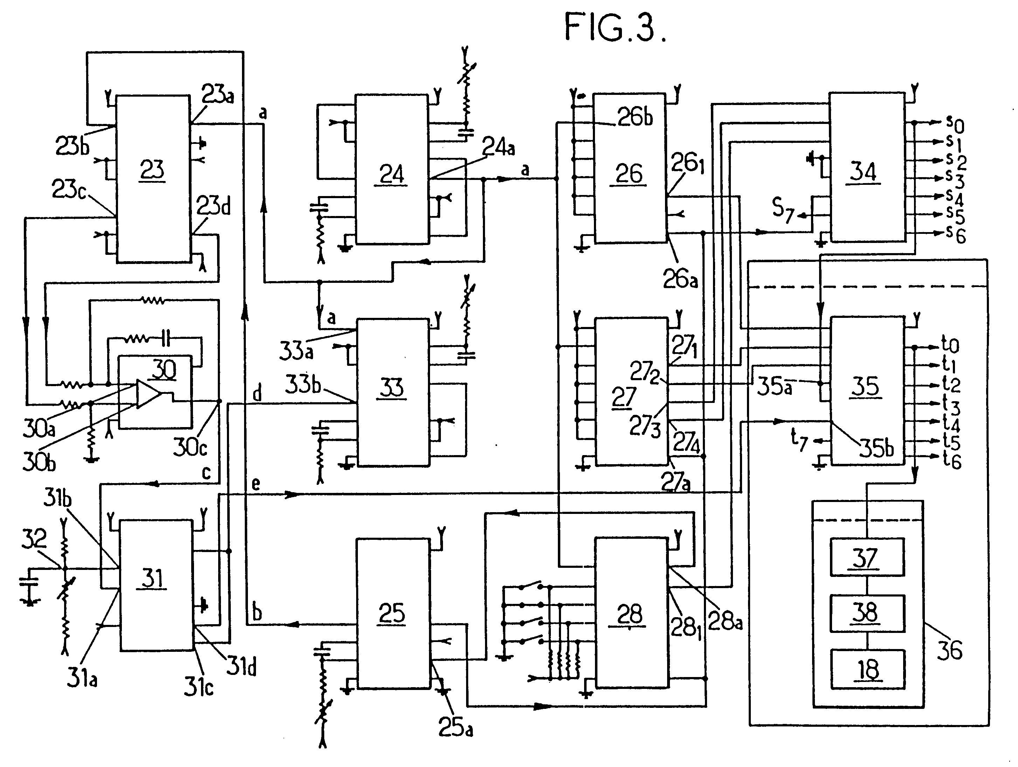

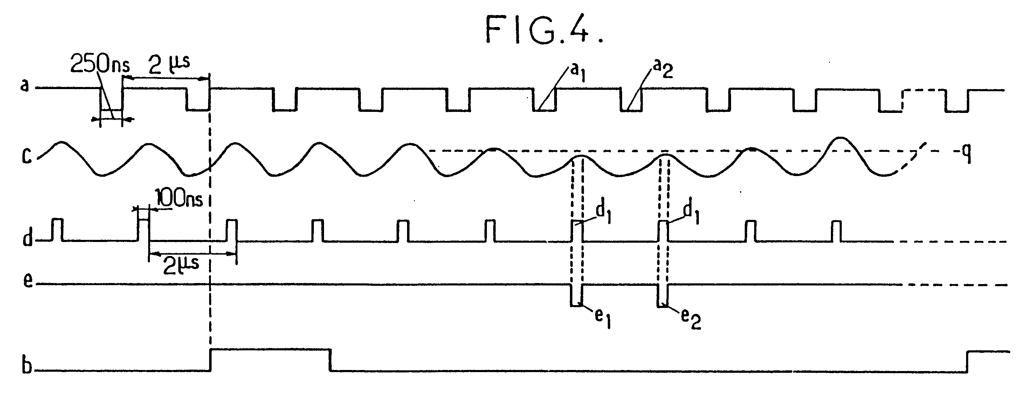

− une caméra ou unité de détection K, avantageusement du type dispositif photosensible linéaire à transfert de charge à nombreux éléments photosensibles élémentaires et qui sera décrite plus en détail ci-après, notamment avec référence aux figures 3 et 4, et qui reçoit la lumière émise par la source 9 et ayant traversé le plan incliné translucide 6 et éventuellement des morceaux de groisil 3b qui sont transparents, donc des fragments de verre, alors que les morceaux de groisil 3b constitués par des matériaux opaques, tels que des fragments réfractaires ou infusibles, arrêtent la lumière émise par la source 9 en direction de la caméra K, cette caméra comportant un objectif (non représenté) réglé pour une mise au point nette de la surface 6a du plan 6 sur les éléments photosensibles de la caméra;

— des pièces allongées, en forme de marteaux 10, disposées côte à côte dans le sens de la largeur du plan incliné 6 (à savoir suivant la direction perpendiculaire au plan de la figure 1) et pouvant basculer chacune autour d'un axe 10c, entre deux positions, à savoir une première position de repos 10a, illustrée en traits pleins, et une seconde position active 10b, illustrée en traits interrompus, position 10b qu'elles viennent occuper sous la commande de la caméra K lorsque celle-ci a détecté dans le canal optique correspondant à ce marteau ou pièce 10 un morceau non transparent;

— deux plans inclinés 11a et 11b (éventuellement brisés), disposés pour recevoir respectivement les fragments 12a déversés par un marteau 10 en position de repos 10a et les fragments 12b déversés par un marteau 10 en position active 10b;

— des moyens d'évacuation, constitués par exemple par une bande transporteuse 13 entraînée par un cylindre 14, pour les morceaux 12b déversés par le plan incliné 11b et qui sont essentiellement constitués de produits céramiques ou infusibles opaques, et

— des moyens d'évacuation, désignés simplement par une flèche 15, pour des morceaux 12a déversés par le plan brisé 11a et constitués essentiellement par des morceaux de verre transparents, ces moyens 15 pouvant également être constitués par une bande transporteuse.

On prévoit généralement des plaques 16a et 16b coopérant respectivement avec les plans 11a et 11b pour canaliser les morceaux 12a et 12b respectivement.

Le fonctionnement du dispositif de la figure 1 est le suivant.

Les morceaux de groisil 3 arrivent, grâce à la bande transporteuse 1, à la trémie 4 et à la table vibrante 5, en tant que morceaux 3a sur le plan incliné 6. En fait la trémie 4 sert de réservoir pour le groisil et permet d'avoir un débit régulier sur la table vibrante 5 qui, elle, permet de donner au lit de groisil qui quitte l'extrémité 8 de cette table, en tant que morceaux 3a, un débit régulier et réglable sans recouvrement des morceaux sur le plan incliné 6.

Le plan incliné 6 sert, par sa pente, à accélérer le mouvement des morceaux de groisil 3b grâce à la gravité, en assurant une séparation entre les différents morceaux. Par ailleurs, du fait de la gravité, les morceaux 3b sont plaqués contre la face supérieure 6a du plan incliné 6, qui est le plan de focalisation de la caméra K, ce qui permet à cette caméra d'examiner les morceaux 3b avec netteté.

Enfin, grâce à sa translucidité, le plan incliné 6 permet un éclairage régulier par en dessous des morceaux de groisil 3b et donc un examen correct par transparence de ces morceaux, les éléments photosensibles de la caméra K distinguant aisément les morceaux transparents en verre, d'une part, et les morceaux opaques en céramique ou infusibles, d'autre part.

Comme indiqué précédemment, la caméra K comporte de nombreux éléments photosensibles (comme précisé ci-dessous) qui forment un certain nombre de canaux optiques, par exemple $n$ canaux qui correspondent chacun à un marteau 10 (il y a donc également $n$ canaux), un élément photodétecteur, ou un groupe d'éléments photodétecteurs, de la caméra K contrôlant un marteau correspondant dans le sens de la largeur du plan incliné 6 (à savoir la direction perpendiculaire au plan de la figure 1). Lorsque le ou les éléments photosensibles correspondant à un marteau 10 sont pleinement éclairés, c'est-à-dire lorsqu'il n'y a pas de morceau opaque dans ce canal dans la zone 6c d'intersection de l'axe $K_1$ de l'élément photosensible et du plan incliné 6, le marteau 10 correspondant occupe la position de repos 10a et par conséquent les fragments passant dans la zone 6c sont transparents et arrivent en tant que fragments 12a sur le plan 11a pour être évacués selon la flèche 15.

Par contre, lorsqu'un photodétecteur ou un groupe de photodétecteurs de la caméra K correspondant à un canal déterminé reçoit moins de lumière du fait de la présence d'un élément non transparent dans la zone 6c de ce canal, l'élément photosensible de ce canal dans la caméra K commande l'actionnement du marteau 10 correspondant pour l'amener dans la position 10b; il en résulte donc que, lorsque le morceau opaque se trouvant dans la zone 6c atteint le marteau, celui-ci bascule dans une position telle que ce morceau soit dévié vers le plan 11b et donc évacué par la bande transporteuse 13 en tant que morceau 12b.

On notera que le temps mis par un fragment 3b entre la zone 6c et la partie basse (un peu au-dessus de 7a) du plan incliné 6 est égal à la durée nécessaire pour l'actionnement de chaque marteau 10 sous la commande des éléments photosensibles correspondants de la caméra K qui ont observé ce fragment.

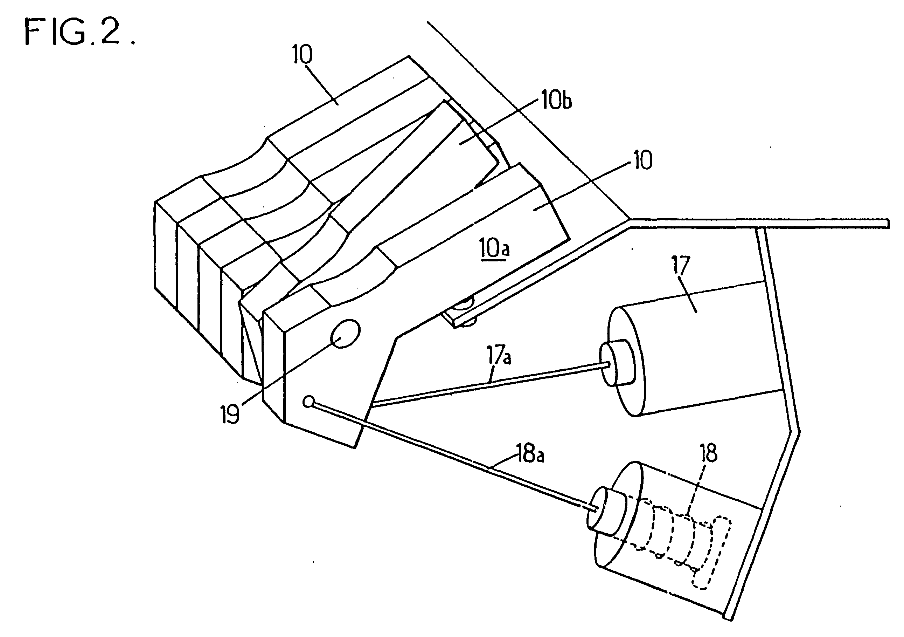

Sur la figure 2 on a illustré les $n$ marteaux pivotants 10, ainsi que

— les $n$ électro-aimants de commande 17 actionnant $n$ tiges ou bielles 17a, chaque électro-aimant 17 agissant par une tige 17a sur un marteau 10, et

— les $n$ ressorts de rappel 18 actionnant les $n$ tiges ou bielles 18a, chaque ressort de rappel agissant par une tige 18a sur un marteau 10.

Ce sont les ressorts 18 qui maintiennent normalement les marteaux 10 en position de repos 10a en l'absence de fragment d'infusible détecté; au contraire, lorsqu'un morceau d'infusible est détecté par un élément photosensible de la caméra K, l'électro-aimant 17 associé à cet élément commande par sa tige 17a la rotation du marteau 10 associé pour l'amener dans la position active 10b par rotation autour de l'axe de pivotement 19 commun à tous les marteaux.

La figure 3 illustre le schéma électronique de la caméra K. Celle-ci comporte tout d'abord un réseau d'éléments photosensibles 23 constitués par exemple par un réseau Reticon de la série G de la société EG & G. RETICON de Sunnyvale (Californie) ou du type dispositif photosensible linéaire à transfert de charge DTC N° TH 7802 de la société THOMSON-CSF.

A titre d'exemple, on peut utiliser un Reticon de la série G à 512 éléments, en prévoyant 64 canaux fictifs pour le groisil sur le plan incliné 6 et par conséquent 64 marteaux 10, 64 électro-aimants 17 et 64 ressorts 18 et par conséquent 64 tiges 17a et 64 tiges 18a.

A titre d'exemple, ces 64 canaux peuvent avoir chacun une largeur de 2 cm, ce qui fait une largeur de détection de $64 \times 2 = 128$ cm, le plan incliné 6 ayant sensiblement une largeur de 128 cm et l'ensemble des marteaux 10 une largeur de 128 cm (64 marteaux larges de 2 cm chacun).

Etant donné que le Reticon comporte 512 éléments photosensibles ou photodétecteurs et qu'il inspecte 64 canaux, il en résulte que chaque canal est observé par un groupe de huit photodétecteurs élémentaires, chaque photodétecteur élémentaire observant une largeur de plan incliné 6 de 0,25 cm au niveau de la zone 6c (en effet $8 \times 0,25$ cm = 2 cm, largeur de chaque canal). A chaque photodétecteur est associé un condensateur qui stocke l'information de détection lumineuse de ce photodétecteur.

Revenant à la figure 3 (qui représente le schéma électronique de la caméra K), on notera que le réseau Reticon 23 reçoit, sur son entrée 23a et à intervalles de temps réguliers, des impulsions d'horloge $a$ (les impulsions $a$ et les autres impulsions mentionnées ci-dessous sont illustrées sur la figure 4 avec leur relation temporelle) à partir de la sortie 24a de l'horloge 24. L'horloge 24 émet, par exemple, une impulsion $a$ toutes les 2 µs, ce qui fait une durée totale de l'ordre de 1 ms pour un cycle complet de 512 impulsions d'horloge $a$ successives, correspondant au balayage des 512 photodétecteurs élémentaires du Reticon 23 et donc une durée de balayage de 1 ms environ pour toute la largeur du plan incliné 6 (durée suffisamment courte pour assurer une sensibilité excellente de détection).

Le réseau Reticon 23 reçoit également, sur son entrée 23b et à chaque début de cycle, une impulsion d'initialisation ou de start $b$ à partir de l'unité d'initialisation 25, une impulsion $b$ étant produite dans cette unité 25 (comme on le verra ci-après) pour chaque 512e impulsion d'horloge.

En effet la sortie 24a de l'horloge 24 envoie également les impulsions $a$ à une cascade de trois compteurs 26, 27 et 28; les compteurs 26 et 27 sont des compteurs de seize impulsions, la sortie 26a du compteur 26 émettant une impulsion pour chaque 16e impulsion d'horloge $a$ reçue sur l'entrée 26b du compteur 26, alors que le compteur 27 émet sur sa sortie 27a une impulsion pour chaque 16e impulsion reçue du compteur 26; le dernier compteur 28 est un compteur de deux impulsions et émet donc sur sa sortie 28a une impulsion pour chaque 2e impulsion reçue du compteur 27 et déclenche l'unité 25 qui reçoit sur son entrée 25a une impulsion après passage de 512 impulsions d'horloge ($16 \times 16 \times 2 = 512$) dans la cascade de compteurs 26, 27 et 28 constituant un diviseur par 512 du fait que chaque compteur 26, 27 réalise une division par 16 et le compteur 28 une division par 2 dans son étage unique (en fait, le compteur 28 peut être identique aux compteurs 26 et 27, en étant toutefois connecté ou programmé en diviseur par 2).

Le réseau Reticon 26, une fois amorcé par les impulsions $b$, décharge successivement les 512 condensateurs, associés chacun à un des 512 photodétecteurs élémentaires, sous l'effet des impulsions successives d'horloge $a$ pendant un cycle de 512 telles impulsions.

Les sorties 23c et 23d du réseau Reticon 23 émettent donc un train de 512 signaux par cycle de 1 ms, ces signaux étant appliqués sur les entrées 30a et 30b d'un amplificateur différentiel 30 dont la sortie, en 30c, est constituée par un signal vidéo $c$ appliqué sur l'entrée 31a d'un comparateur 31 qui reçoit sur son entrée 31b un niveau de seuil $q$ à partir d'un potentiomètre 32. Le comparateur 31 est déclenché par un circuit monostable 33 qui retarde d'une durée déterminée les signaux d'horloge $a$ qui lui arrivent sur son entrée 33a. Les signaux d'horloge équidistants retardés $d$ sortent par la sortie 33b du monostable 33 pour atteindre l'entrée 31c du comparateur 31. Finalement, la sortie 31d du comparateur 31 émet un signal vidéo $e$ lorsque le signal vidéo différentiel $c$ est inférieur (en luminosité) au niveau du seuil précité $q$, et seulement dans ce cas.

Par ailleurs, la caméra K comprend un démultiplexeur 34 comportant huit sorties $s_0$ à $s_7$, dont chacune est connectée à l'entrée de l'un de huit modules 35 (dont un seul est représenté) d'adresse de marteau 10. Sur la figure 3, c'est le module 35, dont l'entrée 35a est connectée à la sortie $s_0$ du démultiplexeur 34, qui est représenté. Chaque module 35 comporte huit sorties $t_0$ à $t_7$ connectées, chacune, à une unité 36 de commande d'éjection. Il y a soixante-quatre unités 36, étant donné qu'il y a huit modules 35 chacun avec huit sorties.

Chaque unité de commande d'éjection 36 comporte un circuit monostable 37 actionné par la sortie associée (par exemple $t_0$) d'un module 35, ce monostable commandant un relais 38 qui actionne un électro-aimant d'éjection 17.

Sur la figure 4 on a illustré l'un au-dessous de l'autre les signaux d'horloge $a$, les signaux vidéo $c$, les signaux d'horloge retardés $d$, les signaux vidéo $e$ et les signaux d'initialisation ou start $b$. On a indiqué sur cette figure 4 la durée d'une impulsion d'horloge $a$, à savoir 250 ns (l'intervalle entre deux signaux d'horloge successifs étant de 2 µs), ainsi que la durée des signaux d'horloge retardés $d$ (100 ns), ces signaux étant d'ailleurs de polarité inversée par rapport aux signaux d'horloge, mais l'intervalle entre les signaux $d$ étant également de 2 µs.

Lorsque l'amplitude des signaux vidéo $c$ est inférieure à la valeur de seuil $q$ appliquée sur l'entrée 31b du comparateur 31, à l'instant d'un signal d'horloge retardé ou enable $d$, comme en $d_1$ et $d_2$, une impulsion vidéo $e$, comme $e_1$ et $e_2$, apparaît sur la sortie 31d du comparateur 31. Un signal tel que $e_1$ ou $e_2$ révèle le passage d'un fragment opaque infusible devant le photodétecteur correspondant à l'impulsion $d$, telle que $d_1$ et $d_2$, donc au signal d'horloge $a_1$ ou $a_2$, à savoir le quatrième ou le cinquième signal d'horloge après le signal start *b*.

Le signal tel que e₁ ou e₂ parvient au module 35 correspondant sur son entrée 35b et provoque un signal de sortie sur une des sorties t₀ à t₇ suivant son instant d'arrivée, le module 35, parmi les huit modules, et la sortie *t*, parmi les huit sorties, étant déterminés par l'arrivée des impulsions depuis la cascade de compteurs 26, 27 et 28 sur le démultiplexeur 34 et les huit modules 35.

Comme indiqué ci-dessus, le compteur 26 est un diviseur par 16, le compteur 27 également un diviseur par 16 et le compteur 28 un diviseur par 2. Les six sorties 26₁, 27₁, 27₂, 27₃, 27₄, 28₁, de ces trois compteurs 26, 27, 28 réalisent le codage des 64 canaux de tri par l'intermédiaire de l'unité 34 et les huit unités 35 qui commandent les 64 unités 36. En effet six sorties permettent de coder en binaire 2⁶ = 64 canaux.

Les différents circuits intégrés associés à un réseau Reticon 23 du type 512 G précité peuvent être les suivants:

— 24, 33 et 25 : 74 LS 123   des sociétés Motorola
— 26, 27 et 28 : 74 LS 161   ou National Semi-
— 34 et 35       : 74 LS 138   Conductor
— 30                 : LM 318 N
— 31                 : NE 529        de Signetics

On notera qu'un ensemble ou unité 36 de commande de l'éjection correspond à un canal optique, et donc à un groupe de huit éléments photosensibles du réseau Reticon 23. Du fait qu'il suffit qu'un seul des éléments photosensibles de ce groupe envoie un signal vidéo élémentaire *c* inférieur au seuil *q* pour qu'une impulsion telle que e₁ commande le marteau correspondant au groupe de huit éléments photosensibles, on voit donc qu'un dispositif selon l'invention présente une précision très élevée et une grande sensibilité.

Pour être certain d'éliminer pratiquement tous les fragments de céramique, non transparents, du groisil traité dans un dispositif selon les figures 1 à 3, on règle la sensibilité des unités 23, 30 et 31 pour avoir un seuil *q* relativement élevé, c'est-à-dire une sélectivité très rigoureuse. Dans ces conditions, des morceaux de verre de dimensions relativement grandes peuvent comporter un bord qui apparaît relativement opaque à l'inspection et qui est donc traité comme s'il était un morceau de céramique; il est donc envoyé sur le transporteur 13 de la figure 1. En outre lorsque, sous l'effet d'un morceau opaque de groisil dans un canal optique, le marteau 10 correspondant est basculé dans la position 10b, ce marteau peut diriger vers le plan incliné 11b, et donc vers la bande transporteuse 13, des morceaux de verre se trouvant alors sur ce marteau, à cause de leur situation au voisinage du morceau de céramique (on rappelle qu'à titre d'exemple la largeur d'un marteau est de 2 cm).

En définitive, sur le transporteur 13 se trouvent entraînés, d'une part, des morceaux de céramique et, d'autre part, des morceaux de verre de dimensions plus importantes et à bords relativement opaques et des morceaux de verre voisins de morceaux de céramique pendant leur trajectoire sur le plan incliné 6, notamment dans la zone 6c.

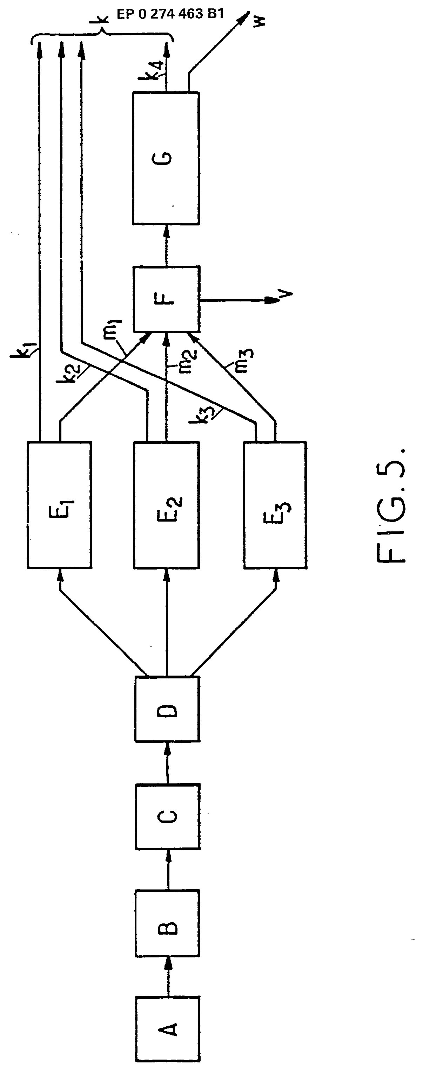

Il est possible de récupérer aussi ces morceaux de verre en mettant en œuvre finalement une installation du type illustré sur la figure 5.

L'installation de la figure 5 comprend, pour traiter le groisil sortant d'une unité de tri manuel A dans laquelle on a débarrassé celui-ci des éléments étrangers de grandes dimensions, une unité de lavage et de séchage B suivie d'une unité de broyage C centrée sur 2 cm, de manière à avoir des particules sortantes dont environ 80% ont des dimensions comprises entre 1,5 et 2,5 cm. Le groisil broyé sortant de l'unité C est criblé dans une unité D qui élimine les particules ayant une dimension maximale inférieure à 6 mm par exemple.

Le produit sortant de l'unité de criblage D, qui a une dimension supérieure à 6 mm, est envoyé dans une batterie de dispositifs de tri optique de groisil du type décrit précédemment avec référence aux figures 1 à 3, ces dispositifs étant référencés E₁, E₂ et E₃ (bien entendu, on pourrait prévoir, au lieu de trois dispositifs en parallèle, un seul dispositif ou bien deux, quatre, cinq ou six dispositifs en parallèle).

Comme expliqué, notamment avec référence à la figure 1, chaque dispositif E₁, E₂ et E₃ sépare, d'une part, des fragments de verre sortant par les voies k₁, k₂ et k₃ respectivement, alors que les refus de ces trois dispositifs m₁, m₂ et m₃ sont dirigés vers une seconde unité de criblage F.

Comme indiqué précédemment, les refus m₁, m₂ et m₃ comportent, en plus des morceaux de céramique, une faible proportion de morceaux de verre mais, parmi ces morceaux de verre, certains ont une dimension assez importante, ce qui justifie leur récupération dans un dispositif G selon l'invention du type décrit ci-dessus avec référence aux figures 1 à 3.

Dans l'unité de criblage F, on élimine les morceaux de dimensions inférieures à 20 mm, comme indiqué en v: il s'agit de morceaux de céramique et de quelques morceaux de verre de petites dimensions ayant accompagné des morceaux de céramique dans les dispositifs de tri E₁, E₂ et E₃ du fait qu'ils se trouvaient sur le même marteau que les morceaux de céramique, la récupération de ces petits morceaux de verre étant économiquement peu intéressante.

Ce sont seulement les morceaux qui ont des dimensions plus grandes que 20 mm qui sont envoyés dans le dispositif G, de manière à récupérer parmi ceux-ci ceux qui seraient en verre et qui auraient été éliminés dans les dispositifs E₁, E₂ et E₃ du fait qu'ils pouvaient présenter des bords opaques par exemple.

Le dispositif de tri G est réglé pour avoir une sensibilité inférieure à celle des dispositifs E₁, E₂ et E₃, le seuil *q* étant plus bas pour le dispositif G.

Dans le dispositif G, seuls les morceaux de céramique subissent l'élimination par des marteaux 10 en position 10b et sont dirigés selon la flèche *w*, alors que les morceaux de verre continuent leur chemin sur des marteaux 10 en position 10a et sont transportés en tant que morceaux de verre k₄.

On récupère donc finalement, dans l'installation de la figure 5, une fraction k du groisil constitué par la réunion des fractions $k_1$, $k_2$, $k_3$ et $k_4$ des dispositifs selon l'invention $E_1$, $E_2$, $E_3$ et G respectivement, cette fraction *k* étant constituée par des morceaux de verre utilisables dans un four de verrerie.

Un dispositif selon l'invention (figures 1 à 3) présente de nombreux avantages par rapport aux dispositifs de tri optique de groisil antérieurs.

En effet, grâce à l'utilisation d'un plan incliné 6, les morceaux de groisil, notamment de verre, glissent sur le côté de plus grande dimension, donc le plus transparent pour le verre, et ce plan incliné permet une focalisation toujours correcte de la caméra K sur les morceaux de groisil, d'où excellente détection.

La détection par transparence, grâce à l'éclairage par en dessous et à la caméra K à Reticon (ou à dispositif analogue) présente l'avantage d'être insensible aux jeux d'ombres et/ou aux réflexions parasites.

L'éjection par marteaux 10 est plus dynamique et plus sélective qu'une sélection par jet d'air.

Enfin, chacun des éléments photodétecteurs (microphotodiodes) du Reticon, ou dispositif analogue, ne voit qu'une très faible surface de la zone 6c sur laquelle il est focalisé, ce qui assure une détection excellente des éléments opaques dans le groisil.

On notera enfin qu'il est possible de régler le seuil de sélection à différents niveaux, ce qui permet de réaliser une installation du type illustré sur la figure 5 comportant un ou des dispositifs selon l'invention très sensibles, suivis d'un dispositif selon l'invention moins sensible qui retrie la fraction éliminée par le ou les dispositifs sensibles, après criblage de cette fraction pour en éliminer les morceaux les plus petits.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

## Revendications

1. Dispositif de tri optique du groisil comportant: des moyens de déversement (1, 2, 4, 5) pour déverser le groisil à trier constitué par des particules (3) de deux natures, à savoir des particules de verre et des particules de nature différente; des moyens optiques permettant de déterminer dans le groisil déversé les particules d'une première nature et comportant une source de lumière (9) et des moyens de détection optique (K); des moyens d'éjection (10) pour éjecter des particules déterminées hors de la masse de groisil déversé, ces derniers moyens étant commandés par les moyens de détection optique (K) lorsqu'ils détectent une particule d'une première nature; et des moyens (11a, 11b) pour acheminer séparément, d'une part, les particules de première nature (12a) éjectées par les moyens d'éjection vers une première sortie et, d'autre part, le reste (12b) de la masse de groisil, constitué essentiellement de particules de seconde nature vers une seconde sortie; un plan incliné (6) en un matériau translucide à la partie supérieure (7) duquel est déversé le groisil à trier (3) par les moyens de déversement (1, 2, 4, 5); une source de lumière (9) allongée et disposée sous la face inférieure (6b) du plan incliné suivant la largeur de celui-ci, caractérisé en ce que les moyens de détection optique sont constitués par une unité opto-électronique allongée (K), avec un circuit intégré à couplage de charge, disposée au-dessus de la face supérieure (6a) du plan incliné suivant la largeur de celui-ci; et en ce que les moyens d'éjection sont constitués par n pièces allongées ou marteaux (10) disposées côte à côte au bas (7a) du plan incliné suivant la largeur de celui-ci et pouvant chacune être déplacée entre une première position de repos (10a) et une seconde position active (10b) sous la commande de l'unité de détection, ces pièces dirigeant, lorsqu'elles occupent la première position, les particules (12a) qui glissent sur elles vers la seconde sortie (11a, 15) et, lorsqu'elles sont dans la seconde position, les particules (12b) qui glissent sur elles vers la première sortie (11b, 13) du dispositif, l'unité opto-électronique (K) comportant n canaux qui observent n canaux adjacents du plan incliné (6), chaque canal du dispositif opto-électronique commandant le marteau, ou pièce allongée, disposé sous le canal du plan incliné observé par ce canal de l'unité opto-électronique, ladite unité opto-électronique comportant — associés à un dispositif photosensible linéaire (23) comportant m × n photodétecteurs élémentaires regroupés en n groupes de m éléments chacun — une horloge (24) dont le dispositif photosensible (23) reçoit les impulsions d'horloge (a), en nombre égal à m × n par cycle, sur son entrée horloge (23a), un diviseur de fréquence à compteur (26, 27, 28) apte à diviser la fréquence des impulsions d'horloge par un nombre égal à m × n, une unité d'initialisation (25) recevant la sortie du diviseur de fréquence pour engendrer un signal d'initialisation de cycle ou start (b), ces impulsions étant appliquées au dispositif photosensible (23) pour initialiser celui-ci toutes les m × n impulsions d'horloge, un amplificateur différentiel (30) connecté en sortie du dispositif photosensible (23) et débitant un signal vidéo (c) représentatif de la lumière détectée successivement par les m × n éléments photodétecteurs du dispositif (23), un comparateur (31) recevant, d'une part, le signal vidéo (c) précité et, d'autre part, un niveau de seuil et débitant une impulsion vidéo (e) chaque fois que le signal vidéo (c) sortant de l'amplificateur est inférieur au niveau de seuil, un circuit à retard (33) recevant les impulsions d'horloge et débitant des signaux d'horloge retardés (d) déclenchant le comparateur, n unités de commande d'éjection (36) aptes à actionner chacune un des n marteaux (10) et un ensemble (34, 35) de commande apte à commander séparément chacune des unités d'éjection (36), cet ensemble recevant, d'une part, les impulsions du diviseur de fréquence pour sélectionner successivement chacune des unités de commande d'éjection et, d'autre part, les impulsions vidéo (e) du comparateur pour actionner effectivement l'unité de commande d'éjection sélectionnée à cet instant du fait de la réception par cet ensemble d'une impulsion, en provenance du diviseur de fréquence, correspondant à cette unité de commande d'éjection.

2. Dispositif selon la revendication 1, caractérisé en ce que l'unité opto-électronique (K) comporte 512 éléments, groupés huit par huit pour constituer 64 canaux de vision sur le plan incliné (6), n étant égal à 64.

3. Dispositif selon la revendication 1 ou 2, caractérisé en ce que n est égal au produit de deux nombres entiers $n_1$ et $n_2$ et en ce que ledit ensemble de commande comprend un démultiplexeur (34) qui alimente successivement $n_1$ voies de sortie ($s_0$, etc.) en réponse aux impulsions successives qui lui sont appliquées par le diviseur de fréquence (26, 27, 28), et $n_1$ modules (35), chacun de ces $n_1$ modules comportant une entrée (35a) connectée à une des $n_1$ sorties du démultiplexeur et une autre entrée (35b) connectée à la sortie du comparateur (31) pour en recevoir les impulsions vidéo (e) et $n_2$ sorties ($t_0$, etc.) connectées chacune à une unité de commande d'éjection (36) associée pour y envoyer des impulsions d'actionnement.

4. Dispositif selon l'une des revendications 1 à 3, caractérisé en ce que le plan incliné (6) est en un verre blanc opalin dans la masse.

5. Dispositif de tri optique selon l'une des revendications 1 à 4, pour une installation de tri optique du groisil, caractérisé en ce que les moyens de détection optique de ce dispositif sont réglés pour présenter une grande sensibilité, et qu'un autre dispositif de tri optique (G) est prévu à la suite du premier pour recevoir les produits de première nature provenant du premier dispositif, éventuellement après criblage de ces produits dans une unité de criblage (F), cet autre dispositif de tri optique (G) ayant des moyens de détection optique réglés pour présenter une sensibilité plus faible.

**Patentansprüche**

1. Vorrichtung für das optische Aussondern von Glasstaub, umfassend: Ausgussmittel (1, 2, 4, 5) zum Ausgiessen des auszusondernden Glasstaubs, bestehend aus Partikeln (3) zweier Arten, und zwar Glaspartikeln und Partikeln sonstiger Art; optische Mittel, welche es erlauben, die Partikeln einer ersten Art aus dem ausgegossenen Glasstaub zu bestimmen und umfassend eine Lichtquelle (9) und optische Detektionsmittel (K); Auswerfmittel (10) zum Auswerfen von bestimmten Partikeln aus der ausgegossenen Glasstaubmasse, wobei diese letzten Mittel von den optischen Detektionsmitteln (K), wenn sie ein Partikel einer ersten Art detektieren, betätigt werden; und Mittel (11a, 11b) zum separaten Ableiten, einerseits, der von den Auswerfmitteln ausgeworfenen Partikeln einer ersten Art (12a) zu einem ersten Ausgang und, andererseits, der übrigen Glasstaubmasse (12b), bestehend hauptsächlich aus Partikeln einer zweiten Art, zu einem zweiten Ausgang; eine schiefe Ebene (6) aus einem durchscheinenden Material, an deren Oberteil (7) den auszusondernden Glasstaub (3) von den Ausgussmitteln (1, 2, 4, 5) ausgegossen wird; eine längliche, unterhalb der Bodenfläche (6b) der schiefen Ebene, in deren Breite, angeordnete Lichtquelle (9), dadurch gekennzeichnet, dass die optische Detektionsmittel aus einer oberhalb der Oberfläche (6a) der schiefen Ebene, in deren Breite, angeordneten, länglichen, optisch-elektronischen Einheit (K), mit einem integrierten Kreis mit Lastkupplung bestehen; und dass die Auswerfmittel aus n Seite an Seite am Unterteil (7a) der schiefen Ebene, in deren Breite, angeordneten, länglichen Teilen oder Hämmern (10) bestehen, welche je zwischen einer ersten Ruhestelle (10a) und einer zweiten, aktiven Stelle (10b), unter Betätigung von der Detektionseinheit, verschoben werden können, wobei diese Teile, wenn sie sich in der ersten Stelle befinden, die Partikeln (12a), welche darauf fortgleiten, zum zweiten Ausgang (11a, 15) und, wenn sie sich in der zweiten Stelle befinden, die Partikeln (12b), welche darauf fortgleiten, zum ersten Ausgang (11b, 13) leiten, die optisch-elektronische Einheit (K) n Kanäle umfasst, die n anschliessende Kanäle der schiefen Ebene (6) beobachten, wobei jeder Kanal der optisch-elektronischen Vorrichtung den unterhalb dem vom Kanal der optisch-elektronischen Einheit beobachteten Kanal der schiefen Ebene angeordneten Hammer oder länglichen Teil betätigt, die genannte optisch-elektronische Einheit — in Verbindung stehend mit einer linearen fotoempfindlichen Vorrichtung (23), die m × n, in n Gruppen von je m Elementen gruppierte Elementarfotodetektoren umfasst — eine Uhr (24), deren fotoempfindliche Vorrichtung (23) an ihrem Uhreingang (23a) die Uhrimpulsionen (a), in einer Zahl gleich m × n pro Zyklus, empfängt, einen Frequenzteiler mit Zähler (26, 27, 28), der dafür geeignet ist, die Frequenz der Uhrimpulsionen durch eine Zahl gleich m × n zu teilen, eine Initialisierungseinheit (25), welche die Ausgabe des Frequenzteilers empfängt, zum Erzeugen eines Zyklusinitialisierungs- oder Startsignals (b), wobei diese Impulsionen an die fotoempfindliche Vorrichtung (23) angebracht werden, zur Initialisierung dieser letzten jede m × n Uhrimpulsionen, einen Differentialverstärker (30), der am Ausgang der fotoempfindlichen Vorrichtung (23) angeschlossen ist und ein Videosignal (c) im Verhältnis zum nacheinander von den m × n fotoempfindlichen Elementen der Vorrichtung (23) detektierten Licht aussendet, einen Vergleicher (31), der, einerseits, das oben erwähnte Videosignal (c) und, andererseits, ein Schwellenniveau empfängt und jedesmal, wenn das aus dem Verstärker kommende Videosignal (c) das Schwellenniveau unterschreitet, eine Videoimpulsion (e) aussendet, einen Verzögerungskreis (33), der die Uhrimpulsionen empfängt und verzögerte Uhrsignale (d), welche den Vergleicher einschalten, aussendet, n Auswerfsteuereinheiten (36), die dafür geeignet sind, je einen der n Hämmer (10) zu betätigen, und eine Steuereinheit (34, 35), die dafür geeignet ist, jede Auswerfeinheit (36) separat zu steuern, wobei diese Einheit, einerseits, die Impulsionen des Frequenzteilers, zum nacheinander Wählen jeder der Auswerfsteuereinheiten, und, anderseits, die Videoimpulsionen (e) des Vergleichers, zum tatsächlichen Betätigen der zu dieser Zeit, zufolge des Empfangs von dieser Einheit einer dieser Auswerfsteuereinheit entsprechenden, aus dem Frequenzteiler stammenden Impulsion, gewählten Auswerfsteuereinheit, umfasst.

2. Vorrichtung nach Anspruch 1, dadurch gekennzeichnet, dass die optisch-elektronische Einheit (K) 512 Elemente umfasst, welche acht zu acht gruppiert sind, zum Bilden von 64 Kanälen zur Beobachtung der schiefen Ebene (6), wobei n gleich 64 ist.

3. Vorrichtung nach Anspruch 1 oder 2, dadurch gekennzeichnet, dass n gleich des Produkts zweier ganzen Zahlen $n_1$ und $n_2$ ist und dass die genannte Steuereinheit einen Demultiplexer (34), der, reagierend auf die nacheinanderfolgenden Impulsionen, die ihm vom Frequenzteiler (26, 27, 28) angebracht werden, nacheinander $n_1$ Ausgangswege ($s_0$ usw.) speist, und $n_1$ Moduln (35) umfasst, wobei jeder dieser $n_1$ Moduln einen an einem der $n_1$ Ausgänge des Demultiplexers angeschlossenen Eingang (35a) und einen anderen am Ausgang des Vergleiches (31) angeschlossenen Eingang (35b), zum Empfangen dessen Videoimpulsionen (e), und $n_2$ Ausgänge ($t_0$ usw.), welche jeder an einer damit verbundenen Auswerfsteuereinheit (36) angeschlossen sind, um dieser letzten Betätigungsimpulsionen zuzusenden, umfasst.

4. Vorrichtung nach irgendwelchem der Ansprüche 1 bis 3, dadurch gekennzeichnet, dass die schiefe Ebene (6) aus weissem Glas, opalin in der Masse, ist.

5. Vorrichtung für das optische Aussondern nach irgendwelchem der Ansprüche 1 bis 4, für eine Anlage für das optische Aussondern von Glasstaub, dadurch gekennzeichnet, dass die optischen Detektionsmittel dieser Vorrichtung so eingestellt sind, dass sie eine hohe Empfindlichkeit aufweisen, und dass eine andere Vorrichtung für das optische Aussondern (G) anschliessend an der ersten vorgesehen ist, zum Empfangen der von der ersten Vorrichtung kommenden Produkte einer ersten Art, eventuell nach Siebung dieser Produkte in einer Siebeinheit (F), wobei diese andere Vorrichtung für das optische Aussondern (G) optische Detektionsmittel hat, die so eingestellt sind, dass sie eine niedrigere Empfindlichkeit aufweisen.

## Claims

1. Device for optically sorting cullet, comprising: discharging means (1, 2, 4, 5) to pour out the cullet to be sorted and composed of particles (3) of two kinds, i. e. glass particles and particles of a different kind; optical means allowing to determinate out of the cullet discharged the particles of a first kind and comprising a light source (9) and optical sensing means (K); ejecting means (10) for the ejection of the particles determined out of the discharged cullet mass, these latter means being controlled by the optical sensing means (K) when they sense a particle of the first kind; and means (11a, 11b) for separately conveying, on the one hand, the particles of the first kind (12a) which are ejected by the ejecting means towards a first outlet and, on the other hand, the rest (12b) of the cullet mass, essentially composed of particles of the second kind, towards a second outlet; an incline (6) made of a translucide material at the top (7) of which the cullet to be sorted (3) is poured out by the discharging means (1, 2, 4, 5); an elongated light source (9) arranged under the bottom side (6b) of the incline along the width of same, characterized in that the optical sensing means are composed of an elongated optical-electronic unit (K), with a load-coupling integrated circuit, arranged above the upper side (6a) of the incline along the width of same; and in that the ejection means are composed of n elongated parts or hammers (10) arranged side by side at the lower side (7a) of the incline along the width of same and each being allowed to move between a first portion at rest (10a) and a second active portion (10b) under the control of the sensing unit, these parts leading, when they are in the first position, the particles (12a) which creep on it towards the second outlet (11a, 15) and, when they are in the second position, the particles (12b) which creep on it towards the first outlet (11b, 13) of the device, the optical-electronic unit (K) comprising n channels which observe n adjacent channels of the incline (6), each channel of the optical-electronic device controlling the hammer or elongated part arranged under the channel of the incline observed by this channel of the optical-electronic unit said optical-electronic unit comprising — associated with a linear photosensitive device (23) comprising m × n elementary photosensors grouped into n groups of each m elements — a clock (24) the photosensitive device (23) of which receives the clock pulses (a), in a number equal to m × n per cycle, on its clock inlet (23a), a frequency divider with counter (26, 27, 28) able to divide the frequency of the clock pulses by a number equal to m × n, an initialisation unit (25) receiving the output of the frequency divider to produce a cycle initialisation or start signal (b), these pulses being applied to the photosensitive device (23) to initialize same every m × n clock pulses, a differential amplifier (30) connected at the outlet of the photosensitive device (23), generating a video signal (c) representative of the light successively sensed by the m × n photosensing elements of the device (23), a comparator (31) receiving, on the one hand, the above-mentioned video signal (c) and, on the other hand, a threshold level and generating a video pulse (e) whenever the video signal (c) leaving the amplifier is lower than the threshold level, a delayed circuit (33) receiving the clock pulses and generating delayed clock signals (d) tripping the comparator, n ejection control units (36) able to actuate each of the n hammers (10) and a control unit (34, 35) able to separately control each of the ejection units (36), this unit receiving, on the one hand, the pulses from the frequency divider to successively select each of the ejection control units and, on the other hand, the video pulses (e) from the comparator to effectively actuate the ejection control unit selected by that time due to the receiving by that unit of a pulse, coming from the frequency divider, corresponding to that ejection control unit.

2. Device according to claim 1, characterized in that the optical-electronic unit (K) comprises 512 elements, grouped eight by eight in order to form 64 channels of vision onto the incline (6), n being equal to 64.

3. Device according to claim 1 or 2, characterized in that n is equal to the product of two integers $n_1$ and $n_2$ and in that said control unit comprises a demultiplexer (34) which successively feeds $n_1$ ways of outlet ($s_0$ etc.) in response to the successive pulses which are applied to same by the frequency divider (26, 27, 28) and $n_1$ modules (35), each of these $n_1$ modules comprising an inlet (35a) connected to one of the $n_1$ outlets of the demultiplexer and another inlet (35b) connected to the outlet of the comparator (31) to receive from it the video pulses (e) and $n_2$ outlets ($t_0$ etc.), each connected to an associated ejection control unit (36) in order to send actuating pulses to same.

4. Device according to either of claims 1 to 3, characterized in that the incline (6) is made of a white glass, opaline in the mass.

5. Optical sorting device according to either of claims 1 to 4, for an optical cullet sorting plant, characterized in that the optical sensing means of this device are set to have a high sensitivity and in that another optical sorting device (G) is provided after the first one to receive the products of a first nature coming from the first device, eventually after screening of these products in a screening unit (F), this other optical sorting device (G) having optical sensing devices set to have a lower sensitivity.

FIG.1.

EP 0 274 463 B1

FIG.2.

EP 0 274 463 B1

FIG.3.

FIG.4.

EP 0 274 463 B1

FIG.5.